# EUROPEAN PATENT APPLICATION

(11) **EP 2 784 883 A1**
(43) Date of publication of application: **01.10.2014**
(21) Application number: 12852148.1
(22) Date of filing: 21.11.2012
(51) Int. Cl.: H01T 13/16, F02P 13/00, H01T 13/20, H01T 13/39

(54) **SPARK PLUG AND INTERNAL COMBUSTION ENGINE**

(30) Priority: 24.11.2011 JP 2011255863
(71) Applicant: Ando Hiromitsu, Fukui-shi, Fukui 910-0006 (JP); Imagineering, Inc., Kobe-shi, Hyogo 650-0047 (JP)
(72) Inventor: IKEDA Yuji, Kobe-shi Hyogo 650-0047 (JP)
(74) Representative: Smith, Matthew
(86) International application number: PCT/JP2012/080239
(87) International publication number: WO 2013/077382

(57) **Abstract**

The objective of the present invention is to improve the heat conductance of the center electrode of the spark plug in which its center electrode protrudes to the combustion chamber from the defining surface of the chamber. The ignition plug of the present invention comprises a center electrode to where high voltage for spark discharge is applied; an insulator having a penetration hole to where the center electrode is fit; and an earth electrode that forms a discharge gap between the center electrode at where the spark discharge is generated. The center electrode protrudes from a defining surface of an internal combustion engine to a combustion chamber when the ignition plug is attached to the engine. The entirety of a main body of the center electrodes that is fixed by fitting into a penetration hole of the insulator is made of high heat conductance material having heat-conductivity of 250 W / mK or more.

## Description

### Technical Field

The present invention relates to an ignition plug having a central electrode protruding to a combustion chamber. Also, this relates to a combustion chamber using this ignition plug.

### Background

An ignition plug having a central electrode protruding to a combustion chamber is known. For example, JP 2004-247175 A1 discloses a center electrode having a large protrusion length to improve ignitability in lean combustion. When the protrusion is large, a spark flies away from the wall of a combustion chamber of an engine, and the spark flies at a location where air-fuel mixture flows fast. Much gasoline molecules can contact when the spark while the spark is flying. This allows an ignition in very lean air-fuel mixture.

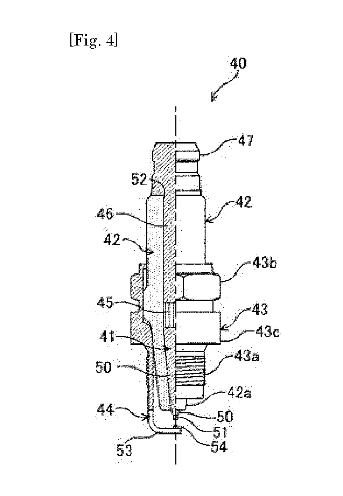

When the protrusion of the center electrode is large, temperature of the electrode increases because the substantial amount of combustion gas is contacted with the electrode. When the temperature of the electrode becomes high, oxidization or pre-ignition is likely to occur. In a spark plug described in JP 2004-247175 A1, solid solution occupies 99.0 % of an electrode by weight to reduce resistance. 99.6 % (by weight) of the solid solution is occupied by nickel. This keeps the temperature of the electrode low that tends to rise due to current flow used for the spark discharge. In Fig.4 of this disclosure, center electrode has a transcalent conductor such as copper in the inside.

JP 2008-123989 A1 discloses a spark plug for internal combustion engine. In this spark plug, a spark gap is formed between a center electrode chip and an earth electrode chip. The spark plug is screwed in the cylinder head of the engine. The spark position H, which is a front tip position of the center electrode chip protruded from edge surface of the cylinder head to the combustion chamber is set between 6.5mm and 10mm based on the ignition evaluation result as shown in Fig. 5 of this patent document.

### Prior Art Document

### Patent Document

Patent Document 1: JP 2004-247175A1
Patent Document 2: JP 2008-123989A1

### Summary of Invention

### Problems to be Solved

When the air-fuel mixture is ignited near combustion chamber wall wall, flame extends from the neighbor of the chamber wall. The flame front contacts the wall of the chamber from an early stage of combustion of the air-fuel mixture. Substantial amount of combustion gas contacts the chamber wall when the piston is near TDC (Top Dead Center) where the combustion gas has high temperature. Here, combustion gas refers to high temperature gas generated by combustion of the fuel. Therefore, heat-transfer from the combustion chamber to its wall is increased. This increases the cooling loss.

One of our approaches for this problem is to enlarge the protrusion length of the ignition plug so that the air-fuel mixture is ignited at a distant from the combustion chamber wall. However, in the conventional ignition plug, only the copper buried inside the center electrode has high heat conductivity and other portion such as nickel does not have high heat conductivity. Therefore, pre-ignition or oxidization may occur due to insufficient decrease of the temperature of the front tip portion of the center electrode.

The present invention is in view of this respect. The objective of the present invention is to improve the heat conductivity of the center electrode of the ignition plug in which the center electrode protrudes from the defining surface of the chamber to the combustion chamber.

### Means for Solving the Problems

The first invention relates to an ignition plug comprising a center electrode to which high voltage for spark discharge is applied; an insulator having a penetration hole to which the center electrode is fit; and an earth electrode that forms a discharge gap between the center electrodes at where the spark is discharged. The center electrode protrudes from a defining surface of an internal combustion engine to a combustion chamber when the ignition plug is attached to the engine. The entirety of a main body of the center electrodes fit and fixed into a penetration hole of the insulator is made of high heat conductance material having heat-conductivity of 250 W / mK or more.

In the first invention, the entirety of the center electrode body is made of high heat conductive material having heat conductivity of 250 W / mK or more. Heat that is transmitted from a surface of center electrode that is contacting the combustion gas can be radiated sufficiently via the entire section surface of the body.

Center electrode body refers to a portion other than a chip portion if the body is jointed with a chip, i.e. iridium chip, at its front tip. Center electrode body refers to entire center electrode when the chip is not jointed.

The second invention relates to the first invention wherein the center of the discharge gap is positioned at the midpoint of combustion chamber height at the installation point of the ignition plug or in the piston side from the midpoint of a cylinder in the axial direction when the piston of the internal combustion engine is at TDC.

The third invention relates to the first or second invention wherein the center electrode comprises the main body, and a chip portion that is connected to the front tip of the main body. The entirety of the main body made of a single high heat conductance material.

The fourth invention relates to one of the first to third invention wherein the main body and the insulator contacts each other at a tapered surface that is broadened with distance from the combustion chamber.

The fifth invention relates to one of the first to fourth invention wherein the insulator is formed tapered, at least at the lower portion of the ignition plug that is broadened with distance from the combustion chamber.

The sixth invention comprises the ignition plug of one of first to fifth inventions and a main body of internal combustion engine that has a combustion chamber and that outputs power when an air-fuel mixture of the combustion chamber is ignited by the ignition plug.

The seventh invention relates to sixth invention and further comprising an EM wave emitting device that emits EM radiation after the start point of the expansion stroke.

The eighth invention relates to an ignition plug comprising: a center electrode to where high voltage for spark discharge is applied; an insulator having a penetration hole to where the center electrode is fit; and an earth electrode that forms a discharge gap between the center electrodes at where the spark discharge is generated. The center electrode protrudes from a defining surface of an internal combustion engine to a combustion chamber when the ignition plug is attached to the engine. The center of the discharge gap is in the midpoint of combustion chamber height at the installation point of the ignition plug or in the piston side from the midpoint of a cylinder in the axial direction when the piston of the internal combustion engine is at TDC.

### Advantage of the present invention

In this invention, the entirety of a main body of the center electrodes is made of high heat conductance material having heat-conductivity of 250 W / mK or more. Compared to a conventional ignition plug, where the high heat conductance material is used only at the central portion of the main body of the center electrode, a substantial heat can be discharged through the main body of the center electrode. This allows improving the heat conductivity of the center electrode compared with the conventional ignition plug.

In the fourth invention, the main body of the center electrodes and insulator are contacted each other at a tapered surface so that the contacting area is enlarged. This allows emitting a substantial amount of heat from the main body of the center electrode via insulator.

In the fifth invention, the sectional surface of the insulator is formed broadened with distance from its front tip portion. This allows emitting a substantial amount of heat from the main body of the center electrode via insulator.

### BRIEF DESCRIPTION OF THE DRAWINGS

Fig. 1 is a cross sectional vertical view of an internal combustion engine according to one embodiment. The piston is positioned at TDC.
Fig. 2 is a cross sectional vertical view of an ignition plug according to one embodiment.

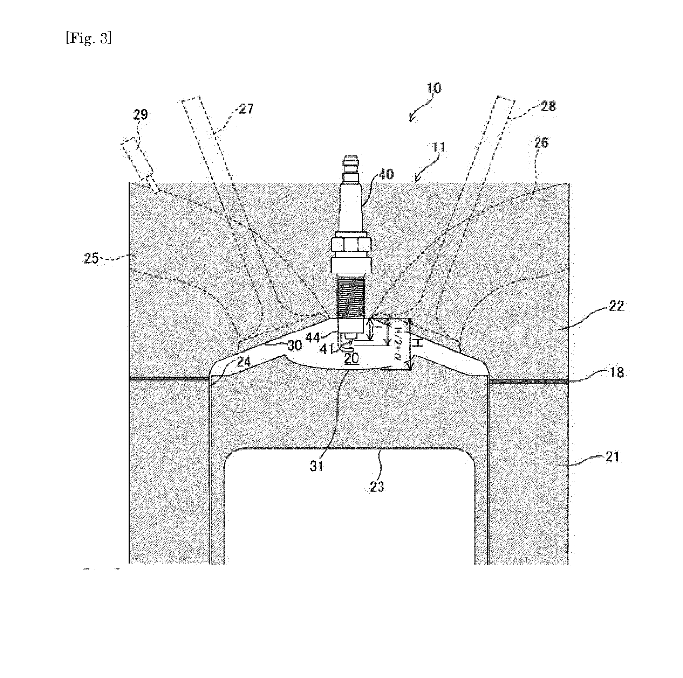

Fig. 3 is a cross sectional vertical view of an internal combustion engine according to the first modification. The piston is positioned at TDC.
Fig. 4 is a cross sectional vertical view of an ignition plug according to the second modification..
Fig. 5 is a cross sectional vertical view of an internal combustion engine according to the third modification. The piston is positioned at TDC.
Fig. 6 is a cross sectional vertical view of an internal combustion engine according to the other embodiment. The piston is positioned at TDC.

### DECRIPTION OF THE PREFERRED EMBODIEMENTS

The embodiments of the present invention are detailed with reference to the accompanying drawings. The embodiments below are the preferred embodiments of the invention, but are not intended to limit the scope of present invention and application or usage thereof.

The present embodiment relates to internal combustion engine 10 of the present invention. Internal combustion engine 10 is a reciprocating internal combustion engine. Internal combustion engine 10 has internal combustion engine body 11 formed with combustion chamber 20, ignition device that ignites air-fuel mixture in combustion chamber 20. In internal combustion engine 10, a combustion cycle, i.e. ignition and combustion of air-fuel mixture, is repetitively executed.

### Internal combustion engine body

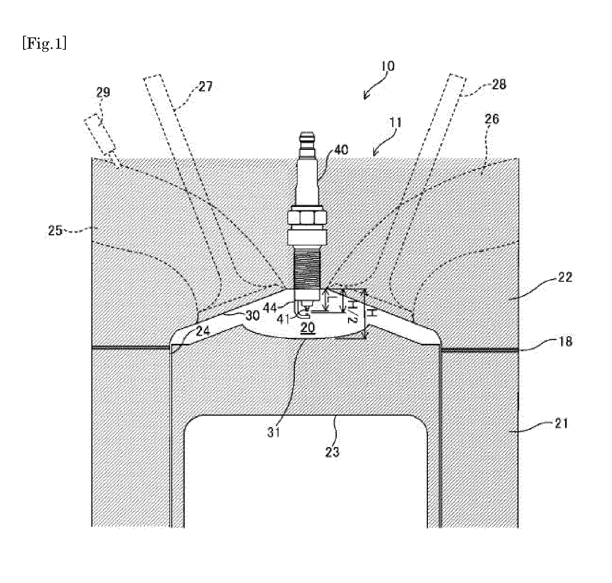

As illustrated in Fig. 1, internal combustion engine body 11 has cylinder block 21, cylinder head 22, and piston 23. Multiple cylinders 24, each having a rounded cross section, are formed in cylinder block 21. Reciprocal pistons 23 are located in each cylinder 24. Pistons 23 are connected to a crankshaft through a connecting rod (not shown in the figure). The rotatable crankshaft is supported on cylinder block 21. The connecting rod converts reciprocations of pistons 23 to rotations of the crankshaft when pistons 23 reciprocate in each cylinder 24 of cylinder 24 in the axial direction.

Cylinder head 22 is located on cylinder block 21 with gasket 18 sandwiched in between. Cylinder head 22 forms a defining component that defines a circular-sectioned combustion chamber 20 together with cylinders 24, pistons 23, and gasket 18.

A single ignition plug 40, which is a part of ignition device, is provided for each cylinder 24 of cylinder head 22. The front tip of ignition plug 40 is placed at the center of the ceiling surface 30 of combustion chamber 20, i.e. on the surface of cylinder head 22 exposed to combustion chamber 20. Center electrode 41 and earth electrode 44 are formed on the front tip of ignition plug 40. A discharge gap is formed between the front tip of center electrode 41 and the front tip portion of earth electrode 44. Structure of ignition plug 40 is detailed later.

Inlet port 25 and outlet port 26 are formed for each cylinder 24 in cylinder head 22. Inlet port 25 has inlet valve 27 for opening and closing the inlet port opening 25a of inlet port 25, and injector 29 that injects fuel. Outlet port 26 has outlet valve 28 for opening and closing the outlet port opening 26a of outlet port 26.

In the present embodiment, crater shaped concaved portion 31 is formed on the top side of piston 23 as shown in Fig. 1. The top side of piston 23 can have other geometry, e.g. flat shape.

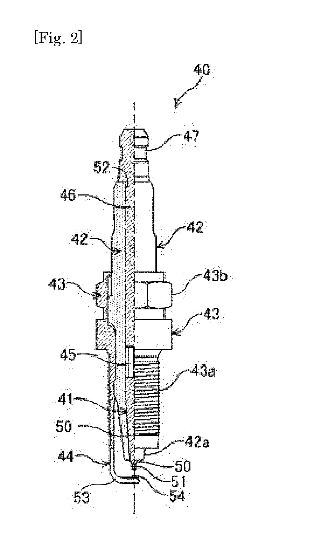

Ignition plug 40 is a hard plug having a long insulator leg 42a, and has center electrode 41 that protrudes toward combustion chamber 20 as shown in Fig. 1. As shown in Fig. 2, ignition plug 40 has center electrode 41, insulator 42, main metal piece 43 and earth electrode 44. Here, insulator leg 42a refers to a portion of insulators 42 which protrudes from opening at the front tip of main metal piece 43.

Center electrode 41 is a conductor to which a high voltage pulse for spark discharge is applied. Center electrode 41 is formed stick-shaped, and is fitted at front tip side of penetration hole 52 of insulator 42. Resistor 45 and axis conductor 46 are fit sequentially in penetration hole 52 of insulator 42 continuing center electrode 41. Axis conductor 46 is integrated with input terminal 47 that is connected to the output terminal of an ignition coil, which is a portion of the ignition device.

Center electrode 41 has center electrode body 50 and enter electrode chip 51. The majority of center electrode body 50 is set to penetration hole 52 of insulator 42 and a part of front tip side is exposed from insulator leg 42a. Center electrode chip 51 is formed columnar. One edge surface of center electrode chip 51 is connected to the front tip surface of center electrode body 50. Oxidized precious metals with high melting point, i.e. iridium are used for center electrode chip 51.

Insulator 42 is formed in cylinder-shape. Insulator 42 is made of insulating material. Insulator 42 insulates conductors such as center electrode 41, resistance body 45, and axis conductor 46 from main metal piece 43 that are in the inside of penetration hole 52. Insulator leg 42a, out of insulator 42, protrudes from main metal piece 43. Inner diameter of insulator 42, i.e. pore diameter of penetration hole 52 is uniform except for the front tip part. The outer diameter of insulator 42 is large in the center portion of the axial direction compared to front tip portion and rear tip portion.

Main metal piece 43 (shell) is a metal casing that is formed in cylindrical shape. Main metal piece 43 supports outer surface of insulator 42 to accommodate insulator 42. The inner surface of front tip part of main metal piece 43 is separated from the outer surface of front tip side of insulator 42. Male screw 43a is formed at the outer surface of front tip side of main metal piece 43 for attachment to internal combustion engine 10. Ignition plug 40 is fixed and screwed to cylinder head 22 by screwing male screw 43a of main metal piece 43 into female screw (not shown in the figure) of a plug hole of cylinder head 22. Wrench fitting portion 43b to where a plug wrench is fit is formed in the upper portion of main metal piece 43. A seal material (not shown in the figure) is provided between main metal piece 43 and insulator 42.

Earth electrode 44 forms the discharge gap between center electrodes 41 where a spark discharge is caused. Earth electrode 44 has earth electrode body 53 and earth electrode chip 54. Earth electrode body 53 is a bended conductor plate. Earth electrode body 53 extends from front tip surface of main metal piece 43 along the shaft center of ignition plug 40 and then is bent inward so that its front tip side faces the front tip of center electrodes 41. Earth electrode chip 54 is formed in columnar shape. One edge of earth electrode chip 54 is connected to an area facing center electrode 41 of earth electrode body 53. An oxidation-resistant and high melting point precious metal, such as platinum is used for earth electrode chip 54.

In this embodiment, front tip portion of ignition plug 40 protrudes from ceiling surface 30 of combustion chamber 20. Specifically, front tip side of main metal piece 43 protrudes from ceiling surface 30 of combustion chamber 20 while male screws 43a does not protrudes from ceiling surface 30. Insulator leg 42a protrudes from an opening of the front tip of main metal piece 43, and center electrode 41 protrudes from the front tip of insulator leg 42a.

The center of discharge gap is at the height of H / 2 of cylinder 24 in the axial direction, where H refers to the combustion chamber 20 height at the installation place of ignition plug 40 when piston 23 is located at TDC. In other words, protrusion length L of center electrode 41 is set such that discharge gap center is at the height of H / 2 of cylinder 24 in the axial direction.

The combustion chamber 20 height corresponds to the distance between ceiling surface 30 of combustion chamber 20 to the bottom surface of concave portion 31 of piston 23. The discharge gap center is in the midpoint of front tip of center electrode chip 51 and front tip of earth electrode chip 54.

According to this embodiment, flame front needs more time to reach ceiling surface 30 of combustion chamber 20 after the ignition of the air-fuel mixture compared to a case where protrusion length L of center electrode 41 is shorter than this embodiment. The amount of combustion gas that contacts ceiling surface 30 of combustion chamber 20 decreases when the piston is close to TDC. The temperature of the combustion gas is comparatively high during this period. Therefore, the amount of heat transmitted from combustion chamber 20 to cylinder head 22 via its ceiling surface 30 decreases.

Further, protrusion length L of center electrode 41 is designed not too long so that the front tip of center electrode 41 does not excessively approach to the top side of piston 23. This provides a time margin before the flame front contacts the top surface of piston 23 from the ignition of air-fuel mixture. The combustion gas that is contacting the top surface of piston 23 decreases when the piston is close to TDC. This allows a decrease in the amount of heat transmitted from combustion chamber 20 to piston 23. Therefore, the amount of heat transmitted from combustion chamber 20 to cylinder head 22 and piston 23 decreases, and the cooling loss of internal combustion engine 10 is thereby decreased.

In this embodiment, the entirety of center electrode body 50 is made of a high heat conductance single material having heat conductivity of 250 W / mK or more and oxide resistance such as multilayer carbon nano-tube. Center electrode body 50 can transmit large heat through entire cross-sectional surface compared to a conventional ignition plug which uses high heat conductance material only for the central portion of the center electrode body. This increases heat conductivity of the center electrode compared to the conventional ignition plug.

The entirety of insulator 42 is made of high heat conductance material having heat conductivity of 250 W / mK or more, an insulating property, and an oxide resistance such as high-pressure diamond. Heat can thereby be emitted outside sufficiently from center electrode body 50 via insulator 42.

In the present embodiment, center electrode body 50 and insulator 42 are contacted on a tapered surface to make contacting area large. Outer surface of center electrode body 50 is formed on the tapered surface that is broadened, except for the rear tip portion, with front tip portion distance from the front tip. The outer surface of center electrode body 50 contacts the hole surface of penetration hole 52 formed on the tapered surface corresponding to the outer surface. This allows emitting much heat outside from center electrode body 50 via insulator 42.

Therefore, much heat can be transmitted in center electrode body 50 and much heat can be emitted to outside from center electrode body via insulator 42. This prevents problems such as pre-ignition and oxidation even when protrusion length L is large.

### Modification 1

In the first modification, protrusion length L of center electrode 41 is large compared to the previous embodiment. Specifically, the center of the discharge gap is closer to piston 23 from the height H / 2 of cylinder 24 in the axial direction. In other words, the center of the discharge gap is at the height of H'/2, assuming that H' is the combustion chamber 20 height at the installation position of ignition plug 40 when the piston is in TDC.

According to this modification, among the heat quantity transferred from combustion chamber 20 to cylinder head 22 and the heat quantity transmitted from combustion chamber 20 to piston 23, the former is decreased preferentially. Coolant flows inside cylinder head 22. Therefore, cooling loss is much decreased when the heat quantity transferred from combustion chamber 20 to cylinder head 22 is decreased.

### Modification 2

In the second embodiment, the outside of center electrode body 50 is formed as a tapered surface that is broadened from the front tip to the rear tip with distance from the front tip. In the lower portion of ignition plug 40, i.e. portion that is lower than portion 43c where the outer diameter of main metal piece 43 is the maximum, the outer diameter of insulator 42 is broadened with distance from the front tip. Therefore, much heat is emitted outside from center electrode body 50 via insulator 42.

### Modification 3

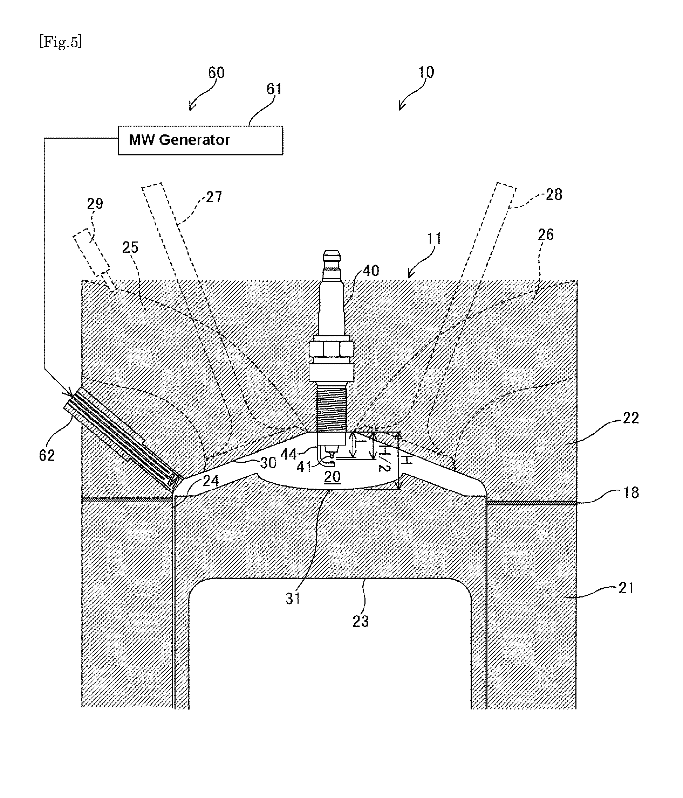

In the third modification, internal combustion engine 10 has EM wave emitting device 60 that emits microwave radiation to combustion chamber 20 after the beginning of the expansion stroke. As shown in Fig.5, EM emitting device 60 has microwave generation device 61 and antenna unit 62.

Microwave generation device 61 outputs microwave pulse in continuous wave when EM wave driving signal is received from electronic control device (not shown in the figure). In microwave generation device 61, a semiconductor oscillator generates microwave radiation. Instead of the semiconductor oscillator, other types of oscillators such as magnetron can be used.

Antenna unit 62 is installed on internal combustion engine body 11. Antenna unit 62 is connected to microwave generation device 61 via coaxial line. When microwave is received from microwave generation device 61, antenna unit 62 emits microwave from its front tip surface that is exposed to combustion chamber 20. The front tip surface of antenna unit 62 is exposed in the outer side of combustion chamber 20.

When microwave is emitted from front tip surface of antenna unit 62, an intense electric field, which is an electric field relatively large in combustion chamber 20, is formed near the front tip surface of antenna unit 62 or near the protrusion part of outer surface of concave part 31. Moving velocity of the flame increases when the flame passes the intense electric field by receiving the microwave energy.

When the microwave energy is large, microwave plasma is generated in the intense electric field. In the area where the microwave plasma is generated, activated species, e.g. OH radical is generated. The activated species allows increasing the moving velocity of the flame. EM wave emitting device 60 constitutes a plasma generation device.

In this modification, EM wave emitting device 60 generates the microwave plasma after the beginning of the expansion stroke, i.e. in the first half of the expansion stroke, to increase the propagation velocity of the flame. The electronic control device outputs the EM wave driving signal at a predetermined timing after the beginning of the expansion stroke, e.g., at the timing when the crank angle is 10 deg. advanced from TDC.

When plasma is generated before TDC and velocity of the flame is increased, much combustion gas contacts cylinder head 22 and piston 23 around TDC period, where the temperature of the combustion gas is high. This increases the cooling loss. However, in this modification, the expansion of the flame at the timing of TDC is small because plasma is generated after the beginning of the expansion stroke. This facilitates the combustion of the air-fuel mixture without increasing the cooling loss.

A secondary antenna (receiving antenna) which resonates to the microwave radiation emitted from the front tip surface of antenna unit 62 may be installed on the defining surface of combustion chamber 20. When microwave is emitted, an intense electric field is formed near the secondary antenna to increases the flame velocity that passes the intense electric field.

### Other embodiments

Other embodiments can be contemplated.

In the above embodiment, center electrode body 50 can be made of a high heat conductance material of 500 W / mK or more or of 1000 W / mK or more

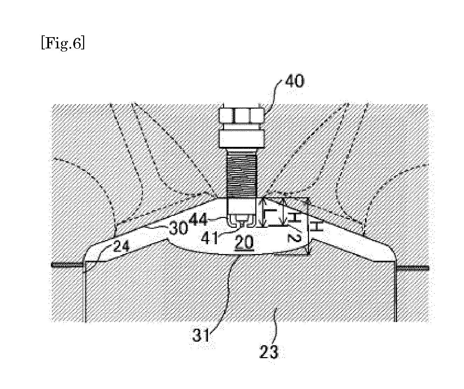

In the above embodiment, ignition plug 40 can be configured such that one or more earth electrodes 44 faces the side surface of front tip of center electrode 41 as shown in Fig. 6. In this case, the center of discharge gap is at half height of the surface of center electrode 41 (or earth electrode 44) of cylinder 24 in the axial direction as shown in Fig. 6. In Fig. 6, center of the discharge gap is at the center of the combustion chamber 20 height at the installation position of ignition plug 40 when piston 23 is located at TDC.

In the above embodiment, main metal piece 43 of ignition plug 40 does not have to be protruded from ceiling surface 30 of combustion chamber 20. This eases the expansion of the flame.

In the above embodiment, the entire center electrode body 50 can be made of material having the porosity close to zero, for example SiC (silicon carbide) as a primary component. The body 50 can be made of aluminum composite materials where a small amount of carbon material is dispersed in an aluminum alloy. The body 50 can be made of copper composite materials where a small amount of carbon material is dispersed in the copper. The body 50 can be made of high heat-conductive material having a hybrid micro-cell structure. Insulator 42 can be made of ceramics having an aluminum oxide as a primary component.

To avoid generation of smoking due to temperature decrease of center electrode 41, a material having a low heat conductivity, compared to center electrode body 50, can be buried inside center electrode body 50.

In the above embodiment, internal combustion engine 10 can be a miller cycle engine that having compression ratio higher than the expansion ratio. This can inhibit an increase of exhaust gas temperature that is accompanied by decrease of cooling loss. This can also inhibit an increase the exhaust loss. Internal combustion engine 10 can be a direct injection type as well as the port injection type.

In the above embodiment, when internal combustion engine 10 has EM wave emitting device 60 as in the third modification, microwave can be emitted inside combustion chamber 20 during the temperature decreased period of center electrode 41 or before this period. Since carbon based center electrode 41 tends to absorb microwave, smoking can be inhibited by raising the temperature of center electrode 41. Carbon based micro-coil that absorbs microwave, e.g. carbon micro-coil, or SiC micro-coil can be mixed in center electrode 41.

### Industrial applicability

As discussed above, present invention is useful for ignition plug where center electrode protrudes toward an internal combustion engine and for a combustion chamber that equips the ignition plug.

### Explanation of Reference Numerals

- 40: Ignition plug
- 41: Center electrode
- 42: Insulator
- 44: Earth electrode
- 50: Center electrode body
- 51: Center electrode chip

## Claims

1. An ignition plug comprising:
a center electrode to where high voltage for spark discharge is applied;
an insulator having a penetration hole to where the center electrode is fit; and
an earth electrode that forms a discharge gap between the center electrode at where the spark discharge is generated;
wherein the center electrode protrudes from a defining surface of an internal combustion engine to a combustion chamber when the ignition plug is attached to the engine and
wherein the entirety of a main body of the center electrodes that is fixed by fitting into a penetration hole of the insulator is made of high heat conductance material having heat-conductivity of 250 W / mK or more.

2. The ignition plug of claim 1; wherein
the center of the discharge gap is in the midpoint of combustion chamber height at the installation point of the ignition plug or in the piston side from the midpoint of a cylinder in the axial direction when the piston of the internal combustion engine is at TDC.

3. The ignition plug of claim 1 or 2;
wherein the center electrode comprises a main body, and a chip portion that is connected to the front tip of the main body, wherein the entirety of the main body is made of a high heat conductance single material.

4. The ignition plug as claimed in one of claims 1 to 3,
wherein the main body and the insulator contacts each other at a tapered surface that is broadened with distance from the combustion chamber.

5. The ignition plug as claimed in one of claims 1 to 4,
wherein the insulator is formed tapered, at least at the lower portion of the ignition plug, that is broadened with distance from the combustion chamber.

6. An internal combustion engine comprising:
an ignition plug as claimed in one of claims 1 to 5; and
a main body of internal combustion engine that has a combustion chamber and that outputs power when an air-fuel mixture of the combustion chamber is ignited by the ignition plug.

7. The internal combustion engine of claim 6, comprising an EM wave emitting device that emits EM radiation after the start point of the expansion stroke

8. An ignition plug comprising:
a center electrode to where high voltage for spark discharge is applied;
an insulator having a penetration hole to where the center electrode is fit; and
an earth electrode that forms a discharge gap between the center electrode at where the spark discharge is generated;
wherein the center electrode protrudes from a defining surface of an internal combustion engine to a combustion chamber when the ignition plug is attached to the engine and
wherein the center of the discharge gap is in the midpoint of combustion chamber height at the installation point of the ignition plug or in the piston side from the midpoint of a cylinder in the axial direction when the piston of the internal combustion engine is at TDC.
